(19) Europäisches Patentamt
European Patent Office
Office européen des brevets

(11) **EP 4 202 485 A1**

(12) **EUROPEAN PATENT APPLICATION**

(43) Date of publication:
**28.06.2023 Bulletin 2023/26**

(21) Application number: **22216492.3**

(22) Date of filing: **23.12.2022**

(51) International Patent Classification (IPC):
**G01S 7/497** (2006.01)   **G01S 7/481** (2006.01)
**G01S 17/931** (2020.01)

(52) Cooperative Patent Classification (CPC):
**G01S 7/497; G01S 7/4817; G01S 17/931**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **23.12.2021 RU 2021138524**

(71) Applicant: **YANDEX SELF DRIVING GROUP LLC Moscow, Skolkovo 121205 (RU)**

(72) Inventors:
• **ORLOV, Nikolay Evgenevich Sarapul, Udmurtskaya Republic (RU)**
• **GOLIKOV, Andrey Viktorovich Zelenograd, Moscow (RU)**

(74) Representative: **Sach, Greg Robert Sach & Associates Siedlungsstrasse 4a 85253 Erdweg (DE)**

(54) **LIDAR SYSTEM AND A METHOD OF CALIBRATING THE LIDAR SYSTEM**

(57) LIDAR systems and methods of calibrating the LIDAR systems are disclosed. The LIDAR system (700) has a light source (702), a scanning unit, a detection unit, and a housing. During operation of the LIDAR system, the method includes actuating a reflective component (750) for redirecting the light beam (773) towards an inner surface (731) of the housing instead of the environment, determining a voltage value in response to capturing a returning light beam, and calibrating the detection unit based on a difference between the voltage value and a baseline voltage value.

Figure 6

EP 4 202 485 A1

**Description**

**TECHNICAL FIELD**

The present technology relates generally to LIDAR systems and, in particular, to methods of calibrating LIDAR systems.

**BACKGROUND**

Several computer-based navigation systems that are configured for aiding navigation and/or control of vehicles have been proposed and implemented in the prior art. These systems range from more basic map-aided localization-based solutions - i.e. use of a computer system to assist a driver in navigating a route from a starting point to a destination point; to more complex ones such as computer-assisted and/or driver-autonomous driving systems.

Some of these systems are implemented as what is commonly known as a "cruise control" system. Within these systems, the computer system boarded on the vehicles maintains a user-set speed of the vehicle. Some of the cruise control systems implement an "intelligent distance control" system, whereby the user can set up a distance to a potential car in front (such as, select a value expressed in a number of vehicles) and the computer system adjusts the speed of the vehicle at least in part based on the vehicle approaching the potential vehicle in front within the pre-defined distance. Some of the cruise control systems are further equipped with collision control systems, which systems, upon detection of the vehicle (or other obstacles) in front of the moving vehicle, slow down or stop the vehicle.

Some of the more advanced systems provide for a fully autonomous driving of the vehicle without direct control from the operator (i.e. the driver). These autonomously driven vehicles include systems that can cause the vehicle to accelerate, brake, stop, change lane and self-park.

One of the main technical challenges in implementing the above systems is the ability to detect objects located around the vehicle. In one example, the systems may need the ability to detect the vehicle in front of the present vehicle (the present vehicle having the system onboard), which vehicle in front may pose a risk / danger to the present vehicle and may require the system to take a corrective measure, be it braking or otherwise changing speed, stopping or changing lanes. In another example, the systems may need to detect a pedestrian or animal crossing in front of the vehicle or otherwise in a surrounding environment of the vehicle.

LIDAR-based object detection generally comprises transmitting beams of light towards a region of interest, and detecting reflected light beams, such as from objects in the region of interest, to generate a representation of the region of interest including any objects. Lasers emitting pulses of light within a narrow wavelength are often used as the radiation (light) source. The position and distance of the object can be computed using *inter alia* Time of Flight calculations of the emitted and detected light beam. By computing such positions as "data points", a digital multi-dimensional representation of the surroundings can be generated.

A 3D representation is formed in part by reflected beams received by the LIDAR which generates data points representative of the surrounding objects. These points form clouds that represent the surrounding environment and form a 3D map. Each point in the point cloud is associated with coordinates in a coordinate space. Additionally, each point can be associated with some additional information such as the distance to the object from the self-driving vehicle. Other information may be associated with the points in the point cloud. In order to improve the volume and/or accuracy of points obtained by the LIDAR system, it is desired to calibrate the LIDAR system.

US Patent 10,241,198 discloses a method for calibrating a LIDAR receiver including a calibration period during which the LIDAR system is configured to not emit light.

**SUMMARY**

Therefore, there is a need for systems and methods which avoid, reduce or overcome the limitations of the prior art.

Light detection and ranging (LIDAR) systems are widely used in self-driving vehicles for detecting objects and navigating its surroundings. It collects points corresponding to light beams reflected from the objects in surroundings and uses these points for creating a cloud of points that serves as a 3D map representation of the surrounding environment.

A LIDAR system has *inter alia* a light source, a scanning unit, a detection unit, and a housing. Broadly, the light source generates light beams that are scanned by the scanning unit, and the detection unit captures returning light beams from the environment. The housing has a window for allowing light beams to exit/enter the LIDAR system and generally provides cover to internal components of the LIDAR system from other environmental light sources.

When a light beam returns to the detection unit from the environment, the detection unit captures this returning light beam and generates an electrical current. The electrical current can be used as an analog signal carrying information about location of objects in the surroundings. Thus, the detection unit can be said to be a photodetector configured to generate an analog signal based on a received light signal. A photodetector can use one or more photodiodes for capturing the returning light beam.

Broadly speaking, a photodiode is a semiconductor p-n junction device that converts light into an electrical current. The current is generated when photons are absorbed in the photodiode. Photodiodes may contain optical filters and can have different surface areas, for example. In some cases, photodiodes can be exposed, while in other cases, they can be packaged with an optical fiber connection to allow light to reach the sensitive part of the device. Some diodes designed for use as photodiodes have a PIN junction, rather than a p-n junction, to increase the speed of response. A photodiode is designed to operate in reverse bias.

Developers of the present technology have realized that the photodetector functions when an operational voltage is applied thereto. The value of the operational voltage may vary depending on *inter alia* various implementations of the present technology. On the one hand, the detecting range of the LIDAR system (the distance to the detected objects) may decrease if the operational voltage is too low. On the other hand, the LIDAR system may detect "false points" in the surroundings if the operational voltage is too high.

Developers of the present technology have also realized that during extensive use of the LIDAR system, operational parameters of the photodetector (such as the operational voltage) may deteriorate and/or change based on *inter alia* moisture, temperature, movement, luminosity, etc. Consequently, it is desired to continuously calibrate and/or adjust the one or more operational parameters of the photodetector for ensuring the quality of data generated by the LIDAR system.

Developers of the present technology have devised methods for calibrating the detection unit (having a photodetector) of a LIDAR system. In the context of the present technology, during the calibration process, a voltage value determined by the photodetector in response to a particular returning light beam is compared against a baseline voltage value. More particularly, during the calibration process, the scanning unit is configured to redirect a given light beam towards an inner surface of the housing without the given light beam exiting the housing. As a result, the returning light beam is reflected towards the photodetector from the inner surface of the housing, as opposed to arriving from the environment.

As mentioned above, the voltage value determined in response to capturing this particular returning light beam is compared against a baseline voltage value. Broadly speaking, the baseline voltage value is indicative of a given voltage value that the photodetector determines in response to capturing this particular returning light beam if the photodetector is in a calibrated state (normal/baseline state of operation). Calibration of the photodetector is then performed based on a difference between these two voltage values. For example, the operational voltage of the photodetector may be adjusted so that the voltage values of such returning light beams are equal to the baseline voltage value.

In at least one example, a controller of the LIDAR system may adjust the operational voltage of the photodetector based on the difference between these two voltage values. In an other example, a controller of the LIDAR system may adjust the operational voltage of the photodetector if the difference between these two voltage values is above a predetermined threshold value. The difference between these two voltage values may be expressed in various ways. For example, the difference may be calculated as a mean square deviation, or other types of errors (RMSE, RMSD, MSE, etc.).

In some embodiments, developers of the present technology have devised methods and LIDAR systems where calibration of the photodetector occurs on a "physical level" - i.e., the operational voltage applied to the photodetector itself is adjusted during the calibration process based on the difference between these two values. In other embodiments, developers of the present technology have devised methods and LIDAR systems where calibration of the photodetector occurs on a "processing level" - i.e., the analog signal generated by the photodetector is adjusted during the calibration process based on the difference between these two values.

In the context of the present technology, developers have devised a scanning unit that allows the LIDAR system to perform calibration of the photodetector during a normal operation of the LIDAR system. In other words, the LIDAR system continues to operate while the calibration process is performed. Continuity of operation of the LIDAR system during the calibration process is desirable. In at least one example, where the LIDAR system is used for operating a self-driving vehicle, this continuity of operation means that the self-driving vehicle does not need to stop for calibration and therefore may continue to safely operate in its environment.

The scanning unit comprises a first reflective component and a second reflective component. In at least one embodiment, the first reflective component may be a pivotable reflective component such as a pivotable galvo mirror and the second reflective component may be a rotatable multifaceted reflective component such as a multifaceted reflective prism. The scanning unit may produce the particular returning light beam mentioned above by actuating at least one of the first reflective component and the second reflective component.

The first reflective component may pivot and/or oscillate about a vertical axis and thereby spreads a light beam in a vertical plane. The second reflective component may rotate and/or spin and thereby spreads a light beam in a horizontal plane. When combined, the first reflective component and the second reflective component allow the scanning unit to have a scanning "pattern" in a 2D-plane including vertical and horizontal directions.

In a first broad aspect of the present technology, there is provided a method of calibrating a Light detection and ranging (LIDAR) system. The LIDAR system is mounted to a Self-driving car (SDC) operating in an environment. The LIDAR system has a light source, a scanning unit, a detection unit, and a housing. The scanning unit includes a first reflective component. The first reflective component is for spreading a light beam from the light source along a first axis. The scanning unit and the detection unit are located inside the housing. The housing has a window towards the environment and providing cover for the scanning unit and the detection unit from environmental light sources. The method comprises, during operation of the LIDAR system, actuating the first reflective component for redirecting the light beam towards an inner surface of the housing instead of the environment. The method comprises, during operation of the LIDAR system, determining, by the detection unit, a voltage value in response to capturing a returning light beam. The returning light beam is the light beam reflected by the inner surface of the housing instead of being an other light beam coming from the environment. The method comprises, during operation of the LIDAR system, calibrating the detection unit based on a difference between the voltage value and a baseline voltage value. The baseline voltage value being a given voltage value that a calibrated detection unit determines when the returning light beam is returning from the inner surface of the housing.

In some embodiments of the method, the scanning unit further includes a second reflective component for spreading the light beam from the first reflective component along a second axis. The actuating the first reflective component comprises actuating at least one of the first reflective component and the second reflective component for redirecting the light beam towards the inner surface of the housing instead of the environment

In some embodiments of the method, the detection unit captures only the returning light beam coming from the inner surface of the housing when determining the voltage value.

In some embodiments of the method, the first reflective component is a pivotable reflective component. The actuating comprises pivoting the pivotable reflective component to a position in which the light beam is redirected towards the inner surface of the housing instead of the second reflective component.

In some embodiments of the method, the second reflective component is a rotatable multifaceted reflective component spreading the light beam along a Field of View (FOV). The FOV having (i) a first portion aligned with the window of the housing for scanning the environment, and (ii) a second portion misaligned with the window. The actuating comprises rotating the rotatable multifaceted reflective component so that the light beam is redirected along the second portion of the FOV and towards the inner surface of the housing instead of the window.

In some embodiments of the method, the first portion is useful for detecting an object in the environment and the second portion is useful for the calibrating the detection unit instead of the detecting the object.

In some embodiments of the method, the second portion of the FOV is aligned with the housing on at least one side of the window.

In some embodiments of the method, the calibrating comprises applying a reverse bias voltage onto the detection unit, a value of the reverse bias voltage being based on the difference between the voltage value and the baseline voltage value.

In some embodiments of the method, the method further comprises generating, by the detection unit, an analog signal representative of the returning light beam. The calibrating comprises modifying the analog signal based on the difference between the voltage value and the baseline voltage value.

In some embodiments of the method, the first axis is orthogonal to the second axis.

In some embodiments of the method, the first reflective component horizontally spreads the light beam and the second reflective component vertically spreads the light beam.

In some embodiments of the method, the LIDAR system is operating during operation of the SDC.

In some embodiments of the method, the detection unit comprises one or more photodiodes.

In a second broad aspect of the present technology, there is provided a LIDAR system mounted to a Self-driving car (SDC) operating in an environment. The LIDAR system has a light source, a scanning unit, a detection unit, and a housing. The scanning unit includes a first reflective component. The first reflective component is for spreading a light beam from the light source along a first axis. The scanning unit and the detection unit are located inside the housing. The housing has a window towards the environment and provides cover for the scanning unit and the detection unit from environmental light sources. During operation of the LIDAR system, the LIDAR system is configured to actuate the first reflective component for redirecting the light beam towards an inner surface of the housing instead of the environment. During operation of the LIDAR system, the LIDAR system is configured to determine, by the detection unit, a voltage value in response to capturing a returning light beam. The returning light beam is the light beam reflected by the inner surface of the housing instead of being an other light beam coming from the environment. During operation of the LIDAR system, the LIDAR system is configured to calibrate the detection unit based on a difference between the voltage value and a baseline voltage value. The baseline voltage value is a given voltage value that a calibrated detection unit determines when the returning light beam is returning from the inner surface of the housing.

In some embodiments of the LIDAR system, the scanning unit further includes a second reflective component for spreading the light beam from the first reflective component along a second axis. To actuate the first reflective component comprises the LIDAR system configured to actuate at least one of the first reflective component and the second reflective component for redirecting the light beam towards the inner surface of the housing instead of the environment

In some embodiments of the LIDAR system, the detection unit captures only the returning light beam coming from the inner surface of the housing when determining the voltage value.

In some embodiments of the LIDAR system, the first reflective component is a pivotable reflective component. To actuate comprises the LIDAR system configured to pivot the pivotable reflective component to a position in which the light beam is redirected towards the inner surface of the housing instead of the second reflective component.

In some embodiments of the LIDAR system, the second reflective component is a rotatable multifaceted reflective component spreading the light beam along a Field of View (FOV), the FOV having (i) a first portion aligned with the window of the housing for scanning the environment, and (ii) a second portion misaligned with the window. To actuate comprises the LIDAR system configured to rotate the rotatable multifaceted reflective component so that the light beam is redirected along the second portion of the FOV and towards the inner surface of the housing instead of the window.

In some embodiments of the LIDAR system, the first portion is useful for detecting an object in the environment and the second portion is useful for the calibrating the detection unit instead of the detecting the object.

In some embodiments of the LIDAR system, the second portion of the FOV is aligned with the housing on at least one side of the window.

In some embodiments of the LIDAR system, to calibrate comprises the LIDAR system configured to apply a reverse bias voltage onto the detection unit, a value of the reverse bias voltage being based on the difference between the voltage value and the baseline voltage value.

In some embodiments of the LIDAR system, the LIDAR system is configured to generate, by the detection unit, an analog signal representative of the returning light beam. To calibrate comprises the LIDAR system configured to modify the analog signal based on the difference between the voltage value and the baseline voltage value.

In some embodiments of the LIDAR system, the first axis is orthogonal to the second axis.

In some embodiments of the LIDAR system, the first reflective component horizontally spreads the light beam and the second reflective component vertically spreads the light beam.

In some embodiments of the LIDAR system, the LIDAR system is operating during operation of the SDC.

In some embodiments of the LIDAR system, the detection unit comprises one or more photodiodes.

In the context of the present specification, the term "light source" broadly refers to any device configured to emit radiation such as a radiation signal in the form of a beam, for example, without limitation, a light beam including radiation of one or more respective wavelengths within the electromagnetic spectrum. In one example, the light source can be a "laser source". Thus, the light source could include a laser such as a solid-state laser, laser diode, a high power laser, or an alternative light source such as, a light emitting diode (LED)-based light source. Some (non-limiting) examples of the laser source include: a Fabry-Perot laser diode, a quantum well laser, a distributed Bragg reflector (DBR) laser, a distributed feedback (DFB) laser, a fiber-laser, or a vertical-cavity surface-emitting laser (VCSEL). In addition, the laser source may emit light beams in differing formats, such as light pulses, continuous wave (CW), quasi-CW, and so on. In some non-limiting examples, the laser source may include a laser diode configured to emit light at a wavelength between about 650 nm and 1150 nm. Alternatively, the light source may include a laser diode configured to emit light beams at a wavelength between about 800 nm and about 1000 nm, between about 850 nm and about 950 nm, between about 1300 nm and about 1600 nm, or in between any other suitable range. Unless indicated otherwise, the term "about" with regard to a numeric value is defined as a variance of up to 10% with respect to the stated value.

In the context of the present specification, an "output beam" may also be referred to as a radiation beam, such as a light beam, that is generated by the radiation source and is directed downrange towards a region of interest. The output beam may have one or more parameters such as: beam duration, beam angular dispersion, wavelength, instantaneous power, photon density at different distances from light source, average power, beam power intensity, beam width, beam repetition rate, beam sequence, pulse duty cycle, wavelength, or phase etc. The output beam may be unpolarized or randomly polarized, may have no specific or fixed polarization (e.g., the polarization may vary with time), or may have a particular polarization (e.g., linear polarization, elliptical polarization, or circular polarization).

In the context of the present specification, an "input beam" is radiation or light entering the system, generally after having been reflected from one or more objects in the ROI. The "input beam" may also be referred to as a radiation beam or light beam. By reflected is meant that at least a portion of the output beam incident on one or more objects in the ROI, bounces off the one or more objects. The input beam may have one or more parameters such as: time-of-flight (i.e., time from emission until detection), instantaneous power (e.g., power signature), average power across entire return pulse, and photon distribution/signal over return pulse period etc. Depending on the particular usage, some radiation or light collected in the input beam could be from sources other than a reflected output beam. For instance, at least some portion of the input beam could include light-noise from the surrounding environment (including scattered sunlight) or other light sources exterior to the present system.

In the context of the present specification, the term "surroundings" or "environment" of a given vehicle refers to an area or a volume around the given vehicle including a portion of a current environment thereof accessible for scanning using one or more sensors mounted on the given vehicle, for example, for generating a 3D map of the such surroundings or detecting objects therein.

In the context of the present specification, a "Region of Interest" may broadly include a portion of the observable environment of a LIDAR system in which the one or more objects may be detected. It is noted that the region of interest of the LIDAR system may be affected by various conditions such as but not limited to: an orientation of the LIDAR system (e.g. direction of an optical axis of the LIDAR system); a position of the LIDAR system with respect to the environment (e.g. distance above ground and adjacent topography and obstacles); operational parameters of the LIDAR system (e.g. emission power, computational settings, defined angles of operation), etc. The ROI of LIDAR system may be defined, for example, by a plane angle or a solid angle. In one example, the ROI may also be defined within a certain distance range (e.g. up to 200 m or so).

In the context of the present specification, a "server" is a computer program that is running on appropriate hardware and is capable of receiving requests (e.g. from electronic devices) over a network, and carrying out those requests, or causing those requests to be carried out. The hardware may be implemented as one physical computer or one physical computer system, but neither is required to be the case with respect to the present technology. In the present context, the use of the expression a "server" is not intended to mean that every task (e.g. received instructions or requests) or any particular task will have been received, carried out, or caused to be carried out, by the same server (i.e. the same software and/or hardware); it is intended to mean that any number of software elements or hardware devices may be involved in receiving/sending, carrying out or causing to be carried out any task or request, or the consequences of any task or request; and all of this software and hardware may be one server or multiple servers, both of which are included within the expression "at least one server".

In the context of the present specification, "electronic device" is any computer hardware that is capable of running software appropriate to the relevant task at hand. In the context of the present specification, the term "electronic device" implies that a device can function as a server for other electronic devices, however it is not required to be the case with respect to the present technology. Thus, some (non-limiting) examples of electronic devices include self-driving unit, personal computers (desktops, laptops, netbooks, etc.), smart phones, and tablets, as well as network equipment such as routers, switches, and gateways. It should be understood that in the present context the fact that the device functions as an electronic device does not mean that it cannot function as a server for other electronic devices.

In the context of the present specification, the expression "information" includes information of any nature or kind whatsoever capable of being stored in a database. Thus information includes, but is not limited to visual works (e.g. maps), audiovisual works (e.g. images, movies, sound records, presentations etc.), data (e.g. location data, weather data, traffic data, numerical data, etc.), text (e.g. opinions, comments, questions, messages, etc.), documents, spreadsheets, etc.

In the context of the present specification, a "database" is any structured collection of data, irrespective of its particular structure, the database management software, or the computer hardware on which the data is stored, implemented or otherwise rendered available for use. A database may reside on the same hardware as the process that stores or makes use of the information stored in the database or it may reside on separate hardware, such as a dedicated server or plurality of servers.

In the context of the present specification, the words "first", "second", "third", etc. have been used as adjectives only for the purpose of allowing for distinction between the nouns that they modify from one another, and not for the purpose of describing any particular relationship between those nouns. Further, as is discussed herein in other contexts, reference to a "first" element and a "second" element does not preclude the two elements from being the same actual real-world element.

Implementations of the present technology each have at least one of the above-mentioned object and/or aspects, but do not necessarily have all of them. It should be understood that some aspects of the present technology that have resulted from attempting to attain the above- mentioned object may not satisfy this object and/or may satisfy other objects not specifically recited herein.

Additional and/or alternative features, aspects and advantages of implementations of the present technology will become apparent from the following description, the accompanying drawings and the appended claims.

## BRIEF DESCRIPTION OF THE DRAWINGS

These and other features, aspects and advantages of the present technology will become better understood with regard to the following description, appended claims and accompanying drawings where:

FIG. 1 depicts a schematic diagram of an example computer system configurable for implementing certain non-limiting embodiments of the present technology.
FIG. 2 depicts a schematic diagram of a networked computing environment being suitable for use with certain non-limiting embodiments of the present technology.

FIG. 3 depicts a schematic diagram of an example LIDAR system implemented in accordance with certain non-limiting embodiments of the present technology.

FIG. 4 depicts a schematic diagram of scanning axes of the scanning unit of FIG. 3 in accordance with certain non-limiting embodiments of the present technology.

FIG. 5 depicts a schematic diagram of a further example LIDAR system implemented in accordance with certain non-limiting embodiments of the present technology.

FIG. 6 depicts a schematic diagram of an additional example LIDAR system implemented in accordance with certain non-limiting embodiments of the present technology.

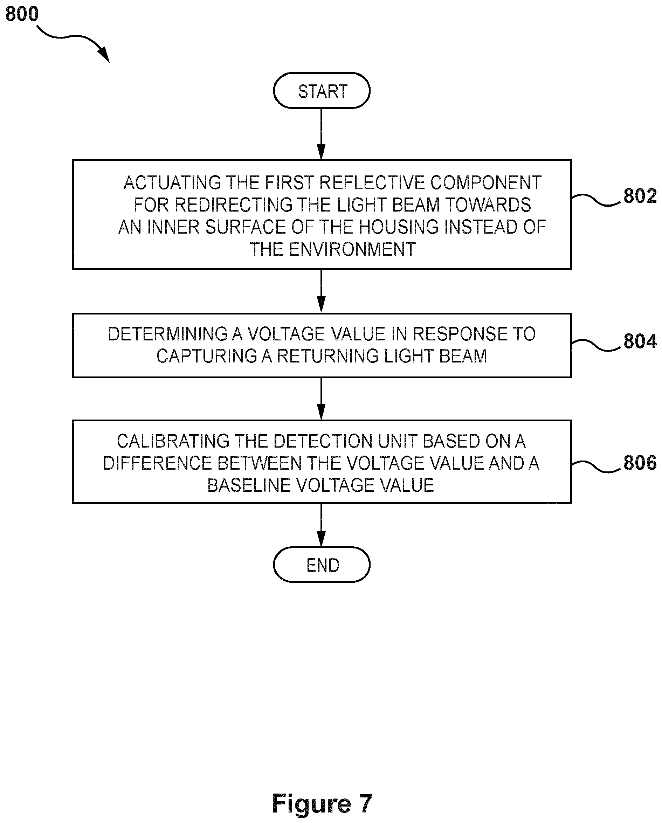

FIG. 7 is a schematic flowchart of a method executable in accordance with certain non-limiting embodiments of the present technology.

## DETAILED DESCRIPTION

The examples and conditional language recited herein are principally intended to aid the reader in understanding the principles of the present technology and not to limit its scope to such specifically recited examples and conditions. It will be appreciated that those skilled in the art may devise various arrangements which, although not explicitly described or shown herein, nonetheless embody the principles of the present technology and are included within its spirit and scope.

Furthermore, as an aid to understanding, the following description may describe relatively simplified implementations of the present technology. As persons skilled in the art would understand, various implementations of the present technology may be of a greater complexity.

In some cases, what are believed to be helpful examples of modifications to the present technology may also be set forth. This is done merely as an aid to understanding, and, again, not to define the scope or set forth the bounds of the present technology. These modifications are not an exhaustive list, and a person skilled in the art may make other modifications while nonetheless remaining within the scope of the present technology. Further, where no examples of modifications have been set forth, it should not be interpreted that no modifications are possible and/or that what is described is the sole manner of implementing that element of the present technology.

Moreover, all statements herein reciting principles, aspects, and implementations of the technology, as well as specific examples thereof, are intended to encompass both structural and functional equivalents thereof, whether they are currently known or developed in the future. Thus, for example, it will be appreciated by those skilled in the art that any block diagrams herein represent conceptual views of illustrative circuitry embodying the principles of the present technology. Similarly, it will be appreciated that any flowcharts, flow diagrams, state transition diagrams, pseudo-code, and the like represent various processes which may be substantially represented in computer-readable media and so executed by a computer or processor, whether or not such computer or processor is explicitly shown.

The functions of the various elements shown in the figures, including any functional block labeled as a "processor", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read-only memory (ROM) for storing software, random access memory (RAM), and non-volatile storage. Other hardware, conventional and/or custom, may also be included.

Software modules, or simply modules which are implied to be software, may be represented herein as any combination of flowchart elements or other elements indicating performance of process steps and/or textual description. Such modules may be executed by hardware that is expressly or implicitly shown.

With these fundamentals in place, we will now consider some non-limiting examples to illustrate various implementations of aspects of the present technology.

## Computer System

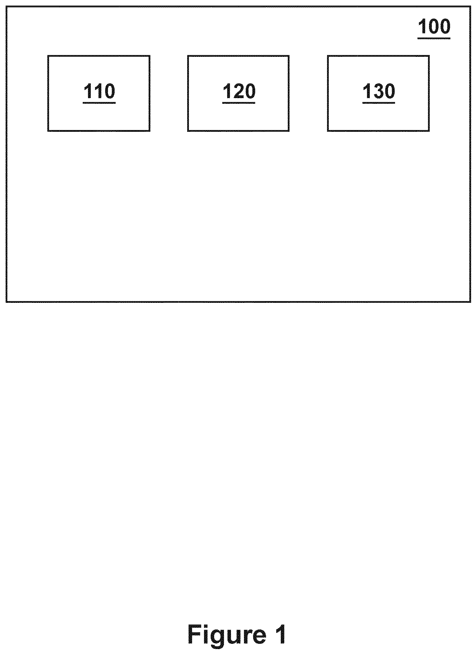

Referring initially to FIG. 1, there is depicted a schematic diagram of a computer system 100 suitable for use with some implementations of the present technology. The computer system 100 includes various hardware components including one or more single or multi-core processors collectively represented by a processor 110, a solid-state drive 120, and a memory 130, which may be a random-access memory or any other type of memory.

Communication between the various components of the computer system 100 may be enabled by one or more internal and/or external buses (not shown) (e.g. a PCI bus, universal serial bus, IEEE 1394 "Firewire" bus, SCSI bus, Serial-ATA bus, etc.), to which the various hardware components are electronically coupled. According to embodiments of the present technology, the solid-state drive 120 stores program instructions suitable for being loaded into the memory 130 and executed by the processor 110 for determining a presence of an object. For example, the program instructions may be part of a vehicle control application executable by the processor 110. It is noted that the computer system 100 may have additional and/or optional components (not depicted), such as network communication modules, localization modules, and the like.

**Networked Computing Environment**

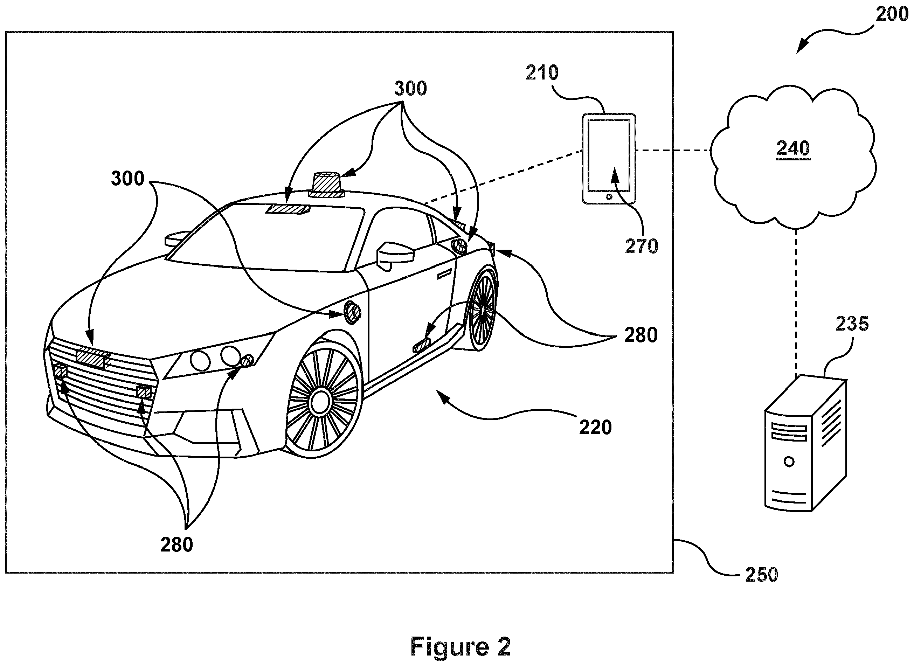

With reference to FIG. 2, there is depicted a networked computing environment 200 suitable for use with some non-limiting embodiments of the present technology. The networked computing environment 200 includes an electronic device 210 associated with a vehicle 220 and/or associated with a user (not depicted) who is associated with the vehicle 220 (such as an operator of the vehicle 220). The networked computing environment 200 also includes a server 235 in communication with the electronic device 210 via a communication network 240 (e.g. the Internet or the like, as will be described in greater detail herein below).

In some non-limiting embodiments of the present technology, the networked computing environment 200 could include a GPS satellite (not depicted) transmitting and/or receiving a GPS signal to/from the electronic device 210. It will be understood that the present technology is not limited to GPS and may employ a positioning technology other than GPS. It should be noted that the GPS satellite can be omitted altogether.

The vehicle 220, to which the electronic device 210 is associated, could be any transportation vehicle, for leisure or otherwise, such as a private or commercial car, truck, motorbike or the like. Although the vehicle 220 is depicted as being a land vehicle, this may not be the case in each and every non-limiting embodiment of the present technology. For example, in certain non-limiting embodiments of the present technology, the vehicle 220 may be a watercraft, such as a boat, or an aircraft, such as a flying drone.

The vehicle 220 may be user operated or a driver-less vehicle. In some non-limiting embodiments of the present technology, it is contemplated that the vehicle 220 could be implemented as a Self-Driving Car (SDC). It should be noted that specific parameters of the vehicle 220 are not limiting, these specific parameters including for example: vehicle manufacturer, vehicle model, vehicle year of manufacture, vehicle weight, vehicle dimensions, vehicle weight distribution, vehicle surface area, vehicle height, drive train type (e.g. 2x or 4x), tire type, brake system, fuel system, mileage, vehicle identification number, and engine size.

According to the present technology, the implementation of the electronic device 210 is not particularly limited. For example, the electronic device 210 could be implemented as a vehicle engine control unit, a vehicle CPU, a vehicle navigation device (e.g. TomTom™, Garmin™), a tablet, a personal computer built into the vehicle 220, and the like. Thus, it should be noted that the electronic device 210 may or may not be permanently associated with the vehicle 220. Additionally or alternatively, the electronic device 210 could be implemented in a wireless communication device such as a mobile telephone (e.g. a smart-phone or a radio-phone). In certain embodiments, the electronic device 210 has a display 270.

The electronic device 210 could include some or all of the components of the computer system 100 depicted in FIG. 1, depending on the particular embodiment. In certain embodiments, the electronic device 210 is an on-board computer device and includes the processor 110, the solid-state drive 120 and the memory 130. In other words, the electronic device 210 includes hardware and/or software and/or firmware, or a combination thereof, for processing data as will be described in greater detail below.

In some non-limiting embodiments of the present technology, the communication network 240 is the Internet. In alternative non-limiting embodiments of the present technology, the communication network 240 can be implemented as any suitable local area network (LAN), wide area network (WAN), a private communication network or the like. It should be expressly understood that implementations for the communication network 240 are for illustration purposes only. A communication link (not separately numbered) is provided between the electronic device 210 and the communication network 240, the implementation of which will depend, *inter alia,* on how the electronic device 210 is implemented. Merely as an example and not as a limitation, in those non-limiting embodiments of the present technology where the electronic device 210 is implemented as a wireless communication device such as a smartphone or a navigation device, the communication link can be implemented as a wireless communication link. Examples of wireless communication links may include, but are not limited to, a 3G communication network link, a 4G communication network link, and the like. The communication network 240 may also use a wireless connection with the server 235.

In some embodiments of the present technology, the server 235 is implemented as a computer server and could include some or all of the components of the computer system 100 of FIG. 1. In one non-limiting example, the server 235 is implemented as a Dell™ PowerEdge™ Server running the Microsoft™ Windows Server™ operating system, but can also be implemented in any other suitable hardware, software, and/or firmware, or a combination thereof. In the depicted non-limiting embodiments of the present technology, the server 235 is a single server. In alternative non-limiting embodiments of the present technology, the functionality of the server 235 may be distributed and may be implemented via multiple servers (not shown).

In some non-limiting embodiments of the present technology, the processor 110 of the electronic device 210 could be in communication with the server 235 to receive one or more updates. Such updates could include, but are not limited to, software updates, map updates, routes updates, weather updates, and the like. In some non-limiting embodiments of the present technology, the processor 110 can also be configured to transmit to the server 235 certain operational data, such as routes travelled, traffic data, performance data, and the like. Some or all such data transmitted between the vehicle 220 and the server 235 may be encrypted and/or anonymized.

It should be noted that a variety of sensors and systems may be used by the electronic device 210 for gathering information about surroundings 250 of the vehicle 220. As seen in FIG. 2, the vehicle 220 may be equipped with a plurality of sensor systems 280. It should be noted that different sensor systems from the plurality of sensor systems 280 may be used for gathering different types of data regarding the surroundings 250 of the vehicle 220.

In one example, the plurality of sensor systems 280 may include various optical systems including, *inter alia,* one or more camera-type sensor systems that are mounted to the vehicle 220 and communicatively coupled to the processor 110 of the electronic device 210. Broadly speaking, the one or more camera-type sensor systems may be configured to gather image data about various portions of the surroundings 250 of the vehicle 220. In some cases, the image data provided by the one or more camera-type sensor systems could be used by the electronic device 210 for performing object detection procedures. For example, the electronic device 210 could be configured to feed the image data provided by the one or more camera-type sensor systems to an Object Detection Neural Network (ODNN) that has been trained to localize and classify potential objects in the surroundings 250 of the vehicle 220.

In another example, the plurality of sensor systems 280 could include one or more radar-type sensor systems that are mounted to the vehicle 220 and communicatively coupled to the processor 110. Broadly speaking, the one or more radar-type sensor systems may be configured to make use of radio waves to gather data about various portions of the surroundings 250 of the vehicle 220. For example, the one or more radar-type sensor systems may be configured to gather radar data about potential objects in the surroundings 250 of the vehicle 220, such data potentially being representative of a distance of objects from the radar-type sensor system, orientation of objects, velocity and/or speed of objects, and the like.

It should be noted that the plurality of sensor systems 280 could include additional types of sensor systems to those non-exhaustively described above and without departing from the scope of the present technology.

**LIDAR System**

According to the non-limiting embodiments of the present technology and as is illustrated in FIG. 2, the vehicle 220 is equipped with at least one Light Detection and Ranging (LIDAR) system, such as a LIDAR system 300, for gathering information about surroundings 250 of the vehicle 220. While only described herein in the context of being attached to the vehicle 220, it is also contemplated that the LIDAR system 300 could be a stand-alone operation or connected to another system.

Depending on the embodiment, the vehicle 220 could include more or fewer LIDAR systems 300 than illustrated. Depending on the particular embodiment, choice of inclusion of particular ones of the plurality of sensor systems 280 could depend on the particular embodiment of the LIDAR system 300. The LIDAR system 300 could be mounted, or retrofitted, to the vehicle 220 in a variety of locations and/or in a variety of configurations.

For example, depending on the implementation of the vehicle 220 and the LIDAR system 300, the LIDAR system 300 could be mounted on an interior, upper portion of a windshield of the vehicle 220. Nevertheless, as illustrated in FIG. 2, other locations for mounting the LIDAR system 300 are within the scope of the present disclosure, including on a back window, side windows, front hood, rooftop, front grill, front bumper or the side of the vehicle 220. In some cases, the LIDAR system 300 can even be mounted in a dedicated enclosure mounted on the top of the vehicle 220.

In some non-limiting embodiments, such as that of FIG. 2, a given one of the plurality of LIDAR systems 300 is mounted to the rooftop of the vehicle 220 in a rotatable configuration. For example, the LIDAR system 300 mounted to the vehicle 220 in a rotatable configuration could include at least some components that are rotatable 360 degrees about an axis of rotation of the given LIDAR system 300. When mounted in rotatable configurations, the given LIDAR system 300 could gather data about most of the portions of the surroundings 250 of the vehicle 220.

In some non-limiting embodiments of the present technology, such as that of FIG. 2, the LIDAR systems 300 is mounted to the side, or the front grill, for example, in a non-rotatable configuration. For example, the LIDAR system 300 mounted to the vehicle 220 in a non-rotatable configuration could include at least some components that are not rotatable 360 degrees and are configured to gather data about pre-determined portions of the surroundings 250 of the vehicle 220.

Irrespective of the specific location and/or the specific configuration of the LIDAR system 300, it is configured to capture data about the surroundings 250 of the vehicle 220 used, for example, for building a multi-dimensional map of objects in the surroundings 250 of the vehicle 220. Details relating to the configuration of the LIDAR systems 300 to capture the data about the surroundings 250 of the vehicle 220 will now be described.

It should be noted that although in the description provided herein the LIDAR system 300 is implemented as a Time of Flight LIDAR system - and as such, includes respective components suitable for such implementation thereof - other implementations of the LIDAR system 300 are also possible without departing from the scope of the present technology. For example, in certain non-limiting embodiments of the present technology, the LIDAR system 300 may also be implemented as a Frequency-Modulated Continuous Wave (FMCW) LIDAR system according to one or more implementation variants and based on respective components thereof as disclosed in a Russian Patent Application 2020117983 filed June 1, 2020 and entitled *"LIDAR DETECTION METHODS AND SYSTEMS"*; the content of which is hereby incorporated by reference in its entirety.

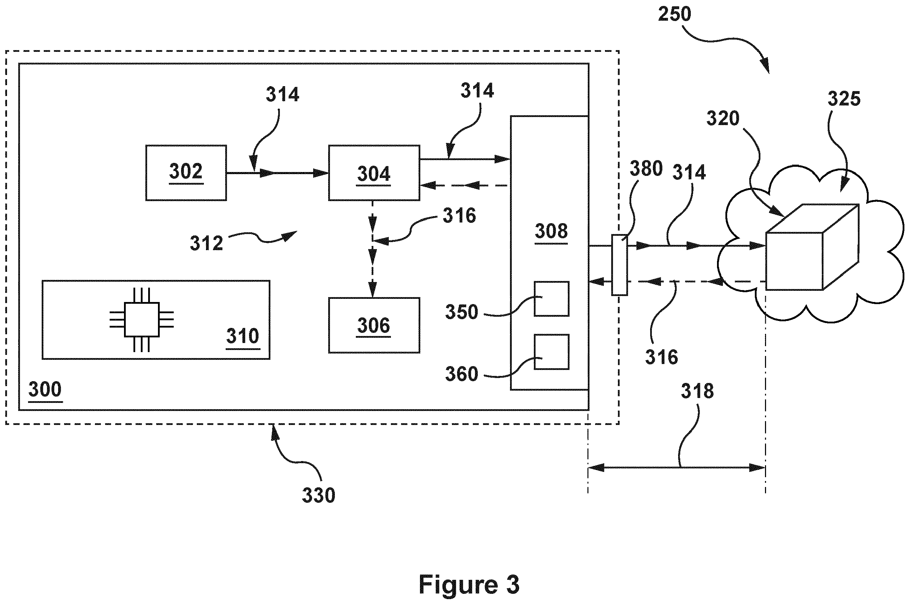

With reference to FIG. 3, there is depicted a schematic diagram of one particular embodiment of the LIDAR system 300 implemented in accordance with certain non-limiting embodiments of the present technology.

Broadly speaking, the LIDAR system 300 includes a variety of internal components including, but not limited to: (i) a light source 302 (also referred to as a "laser source" or a "radiation source"), (ii) a beam splitting element 304, (iii) a scanning unit 308 (also referred to as a "scanner", and "scanner assembly"), (iv) a detection unit 306 (also referred to herein as a "detection system", "receiving assembly", or a "detector"), and (v) a controller 310. It is contemplated that in addition to the components non-exhaustively listed above, the LIDAR system 300 could include a variety of sensors (such as, for example, a temperature sensor, a moisture sensor, etc.) which are omitted from FIG. 3 for sake of clarity.

In certain non-limiting embodiments of the present technology, one or more of the internal components of the LIDAR system 300 are disposed in a common housing 330 as depicted in FIG. 3. In some embodiments of the present technology, the controller 310 could be located outside of the common housing 330 and communicatively connected to the components therein. As it will become apparent from the description herein further below, the housing 330 has a window 380 towards the surroundings of the vehicle 220 for allowing beams of light exiting the housing 330 and entering the housing 330.

Generally speaking, the LIDAR system 300 operates as follows: the light source 302 of the LIDAR system 300 emits pulses of light, forming an output beam 314; the scanning unit 308 scans the output beam 314 through the window 380 across the surroundings 250 of the vehicle 220 for locating/capturing data of *a priori* unknown objects (such as an object 320) therein, for example, for generating a multi-dimensional map of the surroundings 250 where objects (including the object 320) are represented in a form of one or more data points. The light source 302 and the scanning unit 308 will be described in more detail below.

As certain non-limiting examples, the object 320 may include all or a portion of a person, vehicle, motorcycle, truck, train, bicycle, wheelchair, pushchair, pedestrian, animal, road sign, traffic light, lane marking, road-surface marking, parking space, pylon, guard rail, traffic barrier, pothole, railroad crossing, obstacle in or near a road, curb, stopped vehicle on or beside a road, utility pole, house, building, trash can, mailbox, tree, any other suitable object, or any suitable combination of all or part of two or more objects.

Further, let it be assumed that the object 320 is located at a distance 318 from the LIDAR system 300. Once the output beam 314 reaches the object 320, the object 320 generally reflects at least a portion of light from the output beam 314, and some of the reflected light beams may return back towards the LIDAR system 300, to be received in the form of an input beam 316. By reflecting, it is meant that at least a portion of light beam from the output beam 314 bounces off the object 320. A portion of the light beam from the output beam 314 may be absorbed or scattered by the object 320.

Accordingly, the input beam 316 is captured and detected by the LIDAR system 300 *via* the detection unit 306. In response, the detection unit 306 is then configured to generate one or more representative data signals. For example, the detection unit 306 may generate an output electrical signal (not depicted) that is representative of the input beam 316. The detection unit 306 may also provide the so-generated electrical signal to the controller 310 for further processing. Finally, by measuring a time between emitting the output beam 314 and receiving the input beam 316 the distance 318 to the object 320 is calculated by the controller 310.

As will be described in more detail below, the beam splitting element 304 is utilized for directing the output beam 314 from the light source 302 to the scanning unit 308 and for directing the input beam 316 from the scanning unit to the detection unit 306.

Use and implementations of these components of the LIDAR system 300, in accordance with certain non-limiting embodiments of the present technology, will be described immediately below.

**Light Source**

The light source 302 is communicatively coupled to the controller 310 and is configured to emit light having a given operating wavelength. To that end, in certain non-limiting embodiments of the present technology, the light source 302 could include at least one laser preconfigured for operation at the given operating wavelength. The given operating wavelength of the light source 302 may be in the infrared, visible, and/or ultraviolet portions of the electromagnetic spectrum. For example, the light source 302 may include at least one laser with an operating wavelength between about 650 nm and 1150 nm. Alternatively, the light source 302 may include a laser diode configured to emit light at a wavelength between about 800 nm and about 1000 nm, between about 850 nm and about 950 nm, or between about 1300 nm and about 1600 nm. In certain other embodiments, the light source 302 could include a light emitting diode (LED).

The light source 302 of the LIDAR system 300 is generally an eye-safe laser, or put another way, the LIDAR system 300 may be classified as an eye-safe laser system or laser product. Broadly speaking, an eye-safe laser, laser system, or laser product may be a system with some or all of: an emission wavelength, average power, peak power, peak intensity, pulse energy, beam size, beam divergence, exposure time, or scanned output beam such that emitted light from this system presents little or no possibility of causing damage to a person's eyes.

According to certain non-limiting embodiments of the present technology, the operating wavelength of the light source 302 may lie within portions of the electromagnetic spectrum that correspond to light produced by the Sun. Therefore, in some cases, sunlight may act as background noise, which can obscure the light signal detected by the LIDAR system 300. This solar background noise can result in false-positive detections and/or may otherwise corrupt measurements of the LIDAR system 300. Although it may be feasible in some cases to increase a Signal-to-Noise Ratio (SNR) of the LIDAR system 300 by increasing the power level of the output beam 314, this may not be desirable in at least some situations. For example, it may not in some implementations be desirable to increase power levels of the output beam 314 to levels beyond eye-safe thresholds.

The light source 302 includes a pulsed laser configured to produce, emit, or radiate pulses of light with a certain pulse duration. For example, in some non-limiting embodiments of the present technology, the light source 302 may be configured to emit pulses with a pulse duration (e.g., pulse width) ranging from 10 ps to 100 ns. In other non-limiting embodiments of the present technology, the light source 302 may be configured to emit pulses at a pulse repetition frequency of approximately 100 kHz to 5 MHz or a pulse period (e.g., a time between consecutive pulses) of approximately 200 ns to 10 μs. Overall, however, the light source 302 can generate the output beam 314 with any suitable average optical power, and the output beam 314 may include optical pulses with any suitable pulse energy or peak optical power for a given application.

In some non-limiting embodiments of the present technology, the light source 302 could include one or more laser diodes, including but not limited to: Fabry-Perot laser diode, a quantum well laser, a distributed Bragg reflector (DBR) laser, a distributed feedback (DFB) laser, or a vertical-cavity surface-emitting laser (VCSEL). Just as examples, a given laser diode operating in the light source 302 may be an aluminum-gallium-arsenide (AlGaAs) laser diode, an indium-gallium-arsenide (InGaAs) laser diode, or an indium-gallium-arsenide-phosphide (InGaAsP) laser diode, or any other suitable laser diode. It is also contemplated that the light source 302 may include one or more laser diodes that are current-modulated to produce optical pulses.

In some non-limiting embodiments of the present technology, the light source 302 is generally configured to emit the output beam 314 that is a collimated optical beam, but it is contemplated that the beam produced could have any suitable beam divergence for a given application. Broadly speaking, divergence of the output beam 314 is an angular measure of an increase in beam cross-section size (e.g., a beam radius or beam diameter) as the output beam 314 travels away from the light source 302 or the LIDAR system 300. In some non-limiting embodiments of the present technology, the output beam 314 may have a substantially circular cross-section.

It is also contemplated that the output beam 314 emitted by light source 302 could be unpolarized or randomly polarized, could have no specific or fixed polarization (e.g., the polarization may vary with time), or could have a particular polarization (e.g., the output beam 314 may be linearly polarized, elliptically polarized, or circularly polarized).

In at least some non-limiting embodiments of the present technology, the output beam 314 and the input beam 316 may be substantially coaxial. In other words, the output beam 314 and input beam 316 may at least partially overlap or share a common propagation axis, so that the input beam 316 and the output beam 314 travel along substantially the same optical path (albeit in opposite directions). Nevertheless, in other non-limiting embodiments of the present technology, the output beam 314 and the input beam 316 may not be coaxial, or in other words, may not overlap or share a common propagation axis inside the LIDAR system 300, without departing from the scope of the present technology.

It should be noted that in at least some non-limiting embodiments of the present technology, the light source 302 could be rotatable, such as by 360 degrees or less, about the axis of rotation (not depicted) of the LIDAR system 300 when the LIDAR system 300 is implemented in a rotatable configuration. However, in other embodiments, the light source 302 may be stationary even when the LIDAR system 300 is implemented in a rotatable configuration, without departing from the scope of the present technology.

**Beam Splitting Element**

With continued reference to FIG. 3, there is further provided the beam splitting element 304 disposed in the housing 330. For example, as previously mentioned, the beam splitting element 304 is configured to direct the output beam 314 from the light source 302 towards the scanning unit 308. The beam splitting element 304 is also arranged and configured to direct the input beam 316 reflected off the object 320 to the detection unit 306 for further processing thereof by the controller 310.

However, in accordance with other non-limiting embodiments of the present technology, the beam splitting element 304 may be configured to split the output beam 314 into at least two components of lesser intensity including a scanning beam (not separately depicted) used for scanning the surroundings 250 of the LIDAR system 300, and a reference beam (not separately depicted), which is further directed to the detection unit 306.

In other words, in these embodiments, the beam splitting element 304 can be said to be configured to divide intensity (optical power) of the output beam 314 between the scanning beam and the reference beam. In some non-limiting embodiments of the present technology, the beam splitting element 304 may be configured to divide the intensity of the output beam 314 between the scanning beam and the reference beam equally. However, in other non-limiting embodiments of the present technology, the beam splitting element 304 may be configured to divide the intensity of the output beam 314 at any predetermined splitting ratio. For example, the beam splitting element 304 may be configured to use up to 80% of the intensity of the output beam 314 for forming the scanning beam, and the remainder of up to 20% of the intensity of the output beam 314 - for forming the reference beam. In yet other non-limited embodiments of the present technology, the beam splitting element 304 may be configured to vary the splitting ratio for forming the scanning beam (for example, from 1% to 95% of the intensity of the output beam 314).

It should further be noted that some portion (for example, up to 10%) of the intensity of the output beam 314 may be absorbed by a material of the beam splitting element 304, which depends on a particular configuration thereof.

Depending on the implementation of the LIDAR system 300, the beam splitting element 304 could be provided in a variety of forms, including but not limited to: a glass prism-based beam splitter component, a half-silver mirror-based beam splitter component, a dichroic mirror prism-based beam splitter component, a fiber-optic-based beam splitter component, and the like.

Thus, according to the non-limiting embodiments of the present technology, a non-exhaustive list of adjustable parameters associated with the beam splitting element 304, based on a specific application thereof, may include, for example, an operating wavelength range, which may vary from a finite number of wavelengths to a broader light spectrum (from 1200 to 1600 nm, as an example); an income incidence angle; polarizing/non-polarizing, and the like.

In a specific non-limiting example, the beam splitting element 304 can be implemented as a fiber-optic-based beam splitter component that may be of a type available from **OZ Optics Ltd.** of 219 Westbrook Rd Ottawa, Ontario K0A 1L0 Canada. It should be expressly understood that the beam splitting element 304 can be implemented in any other suitable equipment.

**Internal Beam Paths**

As is schematically depicted in FIG. 3, the LIDAR system 300 forms a plurality of internal beam paths 312 along which the output beam 314 (generated by the light source 302) and the input beam 316 (received from the surroundings 250) propagate. Specifically, light propagates along the internal beam paths 312 as follows: the light from the light source 302 passes through the beam splitting element 304, to the scanning unit 308 and, in turn, the scanning unit 308 directs the output beam 314 outward towards the surroundings 250.

Similarly, the input beam 316 follows the plurality of internal beam paths 312 to the detection unit 306. Specifically, the input beam 316 is directed by the scanning unit 308 into the LIDAR system 300 through the beam splitting element 304, toward the detection unit 306. In some implementations, the LIDAR system 300 could be arranged with beam paths that direct the input beam 316 directly from the surroundings 250 to the detection unit 306 (without the input beam 316 passing through the scanning unit 308).

It should be noted that, in various non-limiting embodiments of the present technology, the plurality of internal beam paths 312 may include a variety of optical components. For example, the LIDAR system 300 may include one or more optical components configured to condition, shape, filter, modify, steer, or direct the output beam 314 and/or the input beam 316. For example, the LIDAR system 300 may include one or more lenses, mirrors, filters (e.g., band pass or interference filters), optical fibers, circulators, beam splitters, polarizers, polarizing beam splitters, wave plates (e.g., half-wave or quarter-wave plates), diffractive elements, microelectromechanical (MEM) elements, collimating elements, or holographic elements.

It is contemplated that in at least some non-limiting embodiments of the present technology, the given internal beam path and the other internal beam path from the plurality of internal beam paths 312 may share at least some common optical components, however, this might not be the case in each and every embodiment of the present technology.

**Scanning unit**

Generally speaking, the scanning unit 308 steers the output beam 314 in one or more directions downrange towards the surroundings 250. The scanning unit 308 is communicatively coupled to the controller 310. As such, the controller 310 is configured to control the scanning unit 308 so as to guide the output beam 314 in a desired direction downrange and/or along a predetermined scan pattern. Broadly speaking, in the context of the present specification "scan pattern" may refer to a pattern or path along which the output beam 314 is directed by the scanning unit 308 during operation.

In certain non-limiting embodiments of the present technology, the controller 310 is configured to cause the scanning unit 308 to scan the output beam 314 over a variety of horizontal angular ranges and/or vertical angular ranges; the total angular extent over which the scanning unit 308 scans the output beam 314 is sometimes referred to as the field of view (FOV). It is contemplated that the particular arrangement, orientation, and/or angular ranges could depend on the particular implementation of the LIDAR system 300. The field of view generally includes a plurality of regions of interest (ROIs), defined as portions of the FOV which may contain, for instance, objects of interest. In some implementations, the scanning unit 308 can be configured to further investigate a selected region of interest (ROI) 325. The ROI 325 of the LIDAR system 300 may refer to an area, a volume, a region, an angular range, and/or portion(s) of the surroundings 250 about which the LIDAR system 300 may be configured to scan and/or can capture data.

It should be noted that a location of the object 320 in the surroundings 250 of the vehicle 220 may be overlapped, encompassed, or enclosed at least partially within the ROI 325 of the LIDAR system 300.

According to certain non-limiting embodiments of the present technology, the scanning unit 308 may be configured to scan the output beam 314 horizontally and/or vertically, and as such, the ROI 325 of the LIDAR system 300 may have a horizontal direction and a vertical direction. For example, the ROI 325 may be defined by 45 degrees in the horizontal direction, and by 45 degrees in the vertical direction. In some implementations, different scanning axes could have different orientations.

The scanning unit 308 includes a first reflective component 350 and a second reflective component 360. The first reflective component 350 is configured to redirect the output beam 314 from the beam splitting component towards the second reflective component 350 while spreading the output beam along a first axis. The second reflective component 360 is configured to redirect the output beam 314 from the first reflective component 350 towards the surroundings 250 (through the window 380 of the housing 330) while spreading the output beam along a second axis. The second axis can be perpendicular and/or orthogonal to the first axis. As such, so-redirecting and so-spreading the output beam 314 by the combination of the first reflective component 350 and the second reflective component 360 allows to scan the surroundings 250 of the vehicle 220 along at least two perpendicular/orthogonal axes.

In some embodiments of the present technology, a LIDAR system has a housing with a window. The window be covered by a transparent screen. Inside the housing, the LIDAR system has a light source, a beam splitting component, and a detection unit.

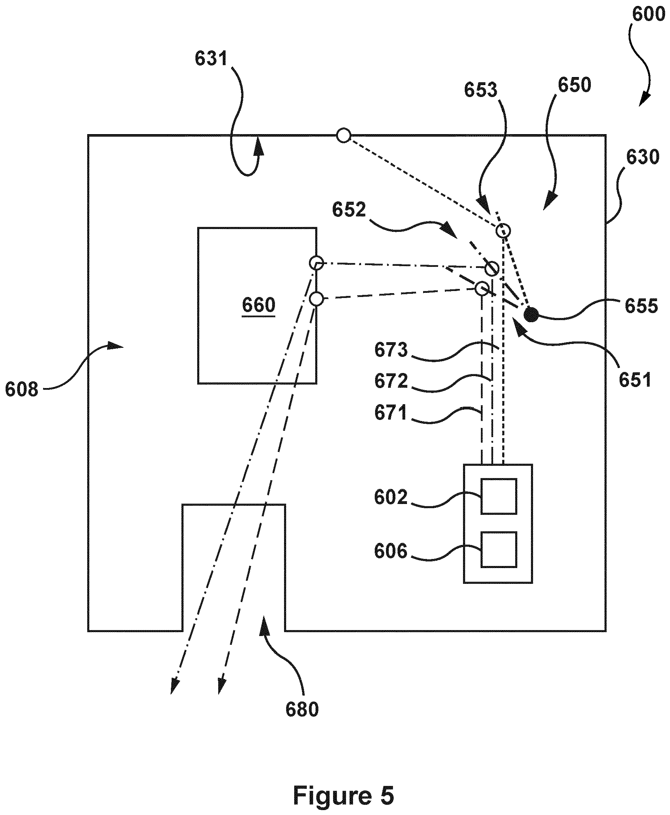

The light source generates a light beam that is directed to a pivotable galvo mirror (e.g., first reflective component), about a pivoting axis. Depending on an orientation of the pivotable galvo mirror in a respective position thereof relative to the incoming light beam, the light beam will be spread along a first axis towards a rotatable reflective prism (e.g., second reflective component). As it will be described in greater details herein further below with reference to an embodiment illustrated in FIG. 5, the pivotable galvo mirror may be in one or more extreme positions in which the light beam is redirected along the first axis but not towards the rotatable reflective prism. Indeed, in one or more extreme positions, the pivotable galvo mirror may redirect the light beam along the first axis towards an inner surface of the housing, instead of the rotatable reflective prism.

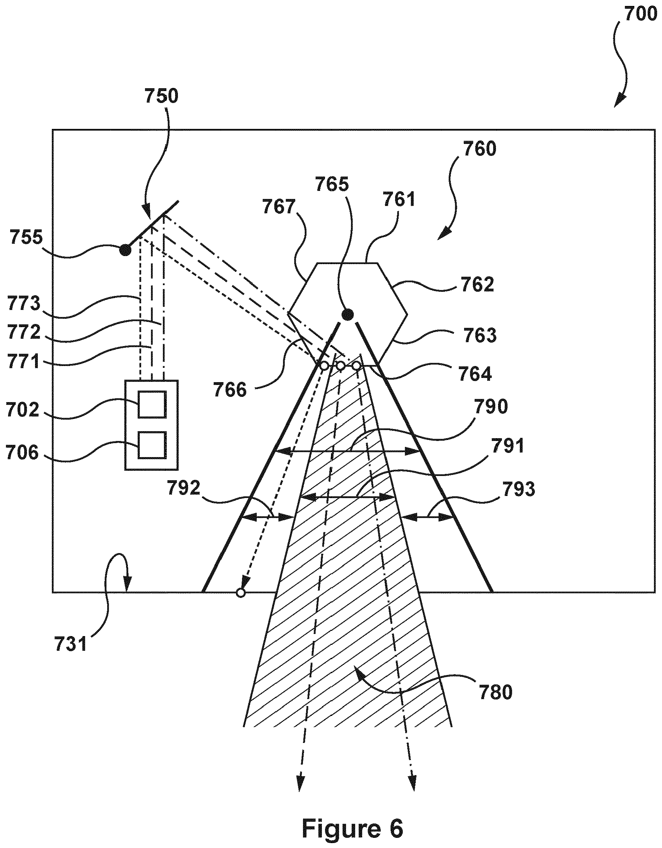

The light beams that are redirected by the pivotable galvo mirror towards the rotatable reflective prism contact one of the reflective sides of the rotatable reflective prism and are redirected along a second axis towards the window. Depending on an angle between the incoming light beam from the pivotable galvo mirror and a corresponding one of the reflective sides of the rotatable reflective prism at a given moment in time (i.e., a respective position of the rotatable reflective prism about its rotational axis), the light beam will be spread along the second axis towards the window. In combination, the pivotable galvo mirror and the rotatable reflective prism can scan light beams along two different axes forming a 2D scanning pattern. As it will be described in greater details herein further below with reference to an embodiment illustrated in FIG. 6, the rotatable reflective prism may be positioned relative to the pivotable galvo mirror and/or relative to the window such that the rotatable reflective prism has a FOV that is broader than an effective FOV offered by the size (e.g., width and/or height) of the window. In other words, in certain positions of the rotatable reflective prism about its rotational axis, the light beam can be redirected by the rotatable reflective prism towards the inner surface of the housing, instead of redirecting this light beam through the window towards the environment.

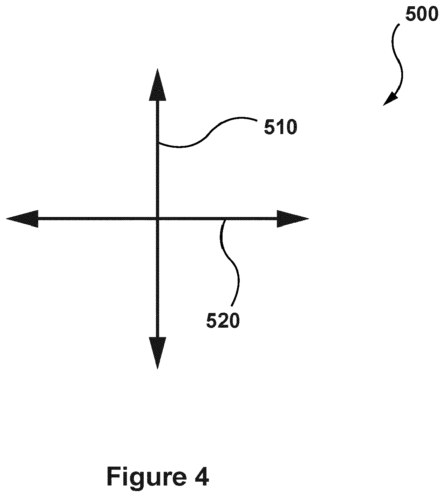

In FIG. 4 there is depicted a representation 500 of a pair of axes along which the scanning unit 308 (and/or the scanning unit 408) may be configured to scan the surroundings. For example, the output beam 314 may be spread by the first reflective component 350 along an axis 510 and by the second reflective component 360 along an axis 520. In one embodiment, the axis 510 may be a vertical axis while the axis 520 may be a horizontal axis. In an other embodiment, the axis 510 may be a horizontal axis while the axis 520 may be a vertical axis.

In certain non-limiting embodiments of the present technology, a given scanning unit may further include a variety of other optical components and/or mechanical-type components for performing the scanning of the output beam. For example, the given scanning unit may include one or more mirrors, prisms, lenses, MEM components, piezoelectric components, optical fibers, splitters, diffractive elements, collimating elements, and the like. It should be noted that the scanning unit may also include one or more additional actuators (not separately depicted) driving at least some of the other optical components to rotate, tilt, pivot, or move in an angular manner about one or more axes, for example.

Returning to the description of FIG. 3, the LIDAR system 300 may thus make use of the predetermined scan pattern to generate a point cloud substantially covering the ROI 325 of the LIDAR system 300. Again, this point cloud of the LIDAR system 300 may be used to render a multi-dimensional map of objects in the surroundings 250 of the vehicle 220.

**Detection unit**

According to certain non-limiting embodiments of the present technology, the detection unit 306 is communicatively coupled to the controller 310 and may be implemented in a variety of ways. According to the present technology, the detection unit 306 includes a photodetector, but could include (but is not limited to) a photoreceiver, optical receiver, optical sensor, detector, optical detector, optical fibers, and the like. As mentioned above, in some non-limiting embodiments of the present technology, the detection unit 306 may be configured to acquire or detects at least a portion of the input beam 316 and produces an electrical signal that corresponds to the input beam 316. For example, if the input beam 316 includes an optical pulse, the detection unit 306 may produce an electrical current or voltage pulse that corresponds to the optical pulse detected by the detection unit 306.

It is contemplated that, in various non-limiting embodiments of the present technology, the detection unit 306 may be implemented with one or more avalanche photodiodes (APDs), one or more single-photon avalanche diodes (SPADs), one or more PN photodiodes (e.g., a photodiode structure formed by a p-type semiconductor and a n-type semiconductor), one or more PIN photodiodes (e.g., a photodiode structure formed by an undoped intrinsic semiconductor region located between p-type and n-type regions), and the like.

In some non-limiting embodiments, the detection unit 306 may also include circuitry that performs signal amplification, sampling, filtering, signal conditioning, analog-to-digital conversion, time-to-digital conversion, pulse detection, threshold detection, rising-edge detection, falling-edge detection, and the like. For example, the detection unit 306 may include electronic components configured to convert a received photocurrent (e.g., a current produced by an APD in response to a received optical signal) into a voltage signal. The detection unit 306 may also include additional circuitry for producing an analog or digital output signal that corresponds to one or more characteristics (e.g., rising edge, falling edge, amplitude, duration, and the like) of a received optical pulse.

Developers of the present technology have realized that a photodetector functions when an operational voltage is applied thereto (reverse bias, for example). The value of the operational voltage may vary depending on *inter alia* various implementations of the present technology. Developers of the present technology have also realized that during extensive use of a LIDAR system, operational parameters of the photodetector (such as the operational voltage) may deteriorate and/or change based on *inter alia* moisture, temperature, movement, luminosity, etc. Consequently, it is desired to continuously calibrate and/or adjust the one or more operational parameters of the photodetector for ensuring the quality of data generated by the LIDAR system.

In the context of the present technology, during the calibration process, a voltage value determined by the photodetector in response to a particular returning light beam is compared against a baseline voltage value. More particularly, during the calibration process, the scanning unit 306 is configured to redirect a given light beam towards an inner surface of the housing 330 without exiting the housing 330. As a result, the returning light beam is reflected towards the photodetector of the detection unit 306 from the inner surface of the housing 330, as opposed to arriving from the environment.

As mentioned above, the voltage value determined in response to capturing this particular returning light beam is compared against a baseline voltage value. Broadly speaking, the baseline voltage value is indicative of a given voltage value that the photodetector determines in response to capturing this particular returning light beam if the photodetector is in a calibrated state (normal/baseline state of operation). Calibration of the photodetector is then performed based on a difference between these two voltage values.

How a given scanning unit as contemplated in some embodiments of the present technology is configured to generate this particular returning light beam for calibrating the detection unit will be discussed in greater details herein further below with reference to FIGS. 5 and 6.

**Controller**

Depending on the implementation, the controller 310 may include one or more processors, an application-specific integrated circuit (ASIC), a field-programmable gate array (FPGA), and/or other suitable circuitry. The controller 310 may also include non-transitory computer-readable memory to store instructions executable by the controller 310 as well as data which the controller 310 may produce based on the signals acquired from other internal components of the LIDAR system 300 and/or may provide signals to the other internal components of the LIDAR system 300. The memory can include volatile (e.g., RAM) and/or non-volatile (e.g., flash memory, a hard disk) components. The controller 310 may be configured to generate data during operation and store it in the memory. For example, this data generated by the controller 310 may be indicative of the data points in the point cloud of the LIDAR system 300.

It is contemplated that, in at least some non-limiting embodiments of the present technology, the controller 310 could be implemented in a manner similar to that of implementing the electronic device 210 and/or the computer system 100, without departing from the scope of the present technology. In addition to collecting data from the detection unit 306, the controller 310 could also be configured to provide control signals to, and potentially receive diagnostics data from, the light source 302 and the scanning unit 308.

As previously stated, the controller 310 is communicatively coupled to the light source 302, the scanning unit 308, and the detection unit 306. In some non-limiting embodiments of the present technology, the controller 310 may be configured to receive electrical trigger pulses from the light source 302, where each electrical trigger pulse corresponds to the emission of an optical pulse by the light source 302. The controller 310 may further provide instructions, a control signal, and/or a trigger signal to the light source 302 indicating when the light source 302 is to produce optical pulses indicative, for example, of the output beam 314.

Just as an example, the controller 310 may be configured to send an electrical trigger signal that includes electrical pulses, so that the light source 302 emits an optical pulse, representable by the output beam 314, in response to each electrical pulse of the electrical trigger signal. It is also contemplated that the controller 310 may cause the light source 302 to adjust one or more characteristics of output beam 314 produced by the light source 302 such as, but not limited to: frequency, period, duration, pulse energy, peak power, average power, and wavelength of the optical pulses.

By the present technology, the controller 310 is configured to determine a "time-of-flight" value for an optical pulse in order to determine the distance between the LIDAR system 300 and one or more objects in the field of view, as will be described further below. The time of flight is based on timing information associated with (i) a first moment in time when a given optical pulse (for example, of the output beam 314) was emitted by the light source 302, and (ii) a second moment in time when a portion of the given optical pulse (for example, from the input beam 316) was detected or received by the detection unit 306. In some non-limiting embodiments of the present technology, the first moment may be indicative of a moment in time when the controller 310 emits a respective electrical pulse associated with the given optical pulse; and the second moment in time may be indicative of a moment in time when the controller 310 receives, from the detection unit 306, an electrical signal generated in response to receiving the portion of the given optical pulse from the input beam 316.

In other non-limiting embodiments of the present technology, where the beam splitting element 304 is configured to split the output beam 314 into the scanning beam (not depicted) and the reference beam (not depicted), the first moment in time may be a moment in time of receiving, from the detection unit 306, a first electrical signal generated in response to receiving a portion of the reference beam. Accordingly, in these embodiments, the second moment in time may be determined as the moment in time of receiving, by the controller 310 from the detection unit 306, a second electrical signal generated in response to receiving an other portion of the given optical pulse from the input beam 316.

By the present technology, the controller 310 is configured to determine, based on the first moment in time and the second moment in time, a time-of-flight value and/or a phase modulation value for the emitted pulse of the output beam 314. The time-of-light value T, in a sense, a "round-trip" time for the emitted pulse to travel from the LIDAR system 300 to the object 320 and back to the LIDAR system 300. The controller 310 is thus broadly configured to determine the distance 318 in accordance with the following equation:

$$D = \frac{c \cdot T}{2}, \qquad (1)$$

wherein $D$ is the distance 318, $T$ is the time-of-flight value, and c is the speed of light (approximately $3.0 \times 10^8$ m/s).

As previously alluded to, the LIDAR system 300 may be used to determine the distance 318 to one or more other potential objects located in the surroundings 250. By scanning the output beam 314 across the ROI 325 of the LIDAR system 300 in accordance with the predetermined scan pattern, the controller 310 is configured to map distances (similar to the distance 318) to respective data points within the ROI 325 of the LIDAR system 300. As a result, the controller 310 is generally configured to render these data points captured in succession (e.g., the point cloud) in a form of a multi-dimensional map. In some implementations, data related to the determined time of flight and/or distances to objects could be rendered in different informational formats.

As an example, this multi-dimensional map may be used by the electronic device 210 for detecting, or otherwise identifying, objects or determining a shape or distance of potential objects within the ROI 325 of the LIDAR system 300.

It is contemplated that the LIDAR system 300 may be configured to repeatedly/iteratively capture and/or generate point clouds at any suitable rate for a given application.

As mentioned above, developers of the present technology have devised methods and systems for calibration a given detection unit of a LIDAR system by producing a particular returning light beam, determining a voltage value for that particular returning light beam, comparing this voltage value against a baseline value, and calibrating the detection unit based on the comparison. Different embodiments of a scanning unit configured to produce such a returning light beam will now be described in turn with reference to FIGS 5 and 6.

**Embodiments of scanning unit**

In FIG. 5, there is depicted a schematic diagram of a LIDAR system 600 in accordance with at least some embodiments of the present technology. The LIDAR system 600 has a housing 630 with a window 680. There is also depicted a light source 602, a detection unit 606, and a scanning unit 608. The scanning unit 608 and the detection unit 606 are located inside the housing 630. The purpose of the housing 630 is to provide cover for the scanning unit 608 and the detection unit 606 from environmental light sources. Various components of the LIDAR system 600 may be implemented in a similar manner to components of the LIDAR system 300 without departing from the scope of the present technology.

The scanning unit 608 has a pivotable reflective component 650 and a rotatable reflective component 660. More particularly, the pivotable reflective component 650 is illustrated in three distinct positions namely, a first position 651, a second position 652, and a third position 653. The pivotable reflective component 650 is configured to pivot about a pivot 655 between a plurality of positions, including the first, the second, and the third positions 651, 652, and 653.

The purpose of pivoting the pivotable reflective component 650 is to spread output beams along a first scanning axis. Light beams 671, 672, and 673 generated by the light source 602 are redirected by the pivotable reflective component 650 along the first scanning axis and depending on a given orientation of the pivotable reflective component 650 when the respective light beams 671, 672, and 673 contact the pivotable reflective component 650.

As seen in FIG. 5, the pivotable reflective component 650 is configured to redirect the light beam 671 and the light beam 672 towards the second reflective component 660 when in the first position 651 and the second position 652, respectively. In turn, the second reflective component 660 is configured to redirect the light beam 671 and the light beam 672 towards the environment through the window 680. Also, the pivotable reflective component 650 is configured to redirect the light beam 673 towards an inner surface 631 of the housing 630 when in the third position 653, instead of towards the second reflective component 660.

It is contemplated that the pivotable reflective component 650 can be pivoted between a range of positions. This range of positions may include (i) a first sub-range of positions in which a given light beam from the light source 602 is redirected towards the second reflective component 660, and (ii) a second sub-range of positions in which the given light beam from the light source 602 is redirected towards the inner surface 631 instead of the second reflective component 660. Additionally or alternatively, it can be said that the range of positions of the pivotable reflective component 650 may include one or more "extreme" positions in which the given light beam is redirected towards the inner surface 631 instead of the second reflective component 660. In other embodiments, it can be said that the FOV of the pivotable reflective component includes (i) a first portion in which the light beam is redirected towards the second reflective component 660, and (ii) a second portion in which the light beam is redirected towards the inner surface 631.

In FIG. 6, there is depicted a schematic diagram of a LIDAR system 700 in accordance with at least some embodiments of the present technology. The LIDAR system 700 has a housing 730 with a window 780. There is also depicted a light source 702, a detection unit 706, and a scanning unit 708. The scanning unit 708 and the detection unit 706 are located inside the housing 730.

The scanning unit 708 has a first reflective component 750 and a rotatable multifaceted reflective component 760. More particularly, the rotatable multifaceted reflective component 760 has a plurality of reflective surfaces including reflective surfaces 761, 762, 763, 764, 766, and 767. The rotatable multifaceted reflective component 760 is configured to rotate about a rotational axis 755.

The purpose of rotating the rotatable multifaceted reflective component 760 is to spread output beams along a second scanning axis. Light beams 771, 772, and 773 generated by the light source 702 (and redirected towards the rotatable multifaceted reflective component 760 by the first reflective component 750) are redirected by the rotatable multifaceted reflective component 760 along the second scanning axis depending on a given orientation of the rotatable multifaceted reflective component 760 when the respective light beams 771, 772, and 773 contact the rotatable multifaceted reflective component 760. Indeed, depending on the position of the rotatable multifaceted reflective component 760 about the rotational axis 755 at a given moment in time, a given light beam is redirected by a given one of the reflective surfaces 761, 762, 763, 764, 766, and 767 along a FOV 790 of the rotatable multifaceted reflective component 760.

Broadly speaking, the FOV 790 of the rotatable multifaceted reflective component 760 is the total angular extent over which the the rotatable multifaceted reflective component 760 scans or spreads light beams. It should be noted that the FOV 790 of the rotatable multifaceted reflective component 760 is located along the second scanning axis.

It should be noted that in some embodiments of the present technology, the FOV 790 of the rotatable multifaceted reflective component 760 can include distinct portions, namely a detection-dedicated portion 791 and calibration-dedicated portions 792 and 793. On the one hand, the detection-dedicated portion 791 can be said to be a given portion of the FOV 790 aligned with the window 780 of the housing 730. The detection-dedicated portion 791 is used by the LIDAR system 700 for detecting objects in the environment by sending and receiving light beams through the window 780. On the other hand, the calibration-dedicated portions 792 and 793 can be said to be an other given portion of the FOV 790 misaligned with the window 780. The calibration-dedicated portions 792 and 793 are used by the LIDAR system 700 for calibration of the detection unit 706, instead of for detecting objects.

As seen in FIG. 6, the rotatable multifaceted reflective component 760 may be configured to redirect the light beam 771 and the light beam 772 along the first portion 791 of the FOV 790 towards the window 780. The rotatable multifaceted reflective component 760 may be configured to redirect the light beam 773 along the calibration-dedicated portion 792 towards an inner surface 731 of the housing 730, instead of towards the window 780.

In at least some embodiments of the present technology, it is contemplated that a position of the rotatable multifaceted reflective component 760 relative to the first reflective component 750 (and/or relative to the window 780) and/or a size of the rotatable multifaceted reflective component 760 can depend on *inter alia* a target FOV that is desired for the LIDAR system 700. It is contemplated that a position of the rotatable multifaceted reflective component 760 relative to the window 780 may depend on *inter alia* a size of the window 780. A variety of configurations, having different relative positions and/or sizes of (i) the first reflective component 750, (ii) the rotatable multifaceted reflective component 760, and (iii) the window 780, can be implemented in the context of the present technology for providing a given FOV to the rotatable multifaceted reflective component 760 such that at least a portion of that given FOV is aligned with the inner surface 731 of the housing 730 for use during calibration of the detection unit 706.

In at least some embodiments of the present technology, there is provided a given LIDAR system that has *inter alia* a housing, a scanning unit and a detection unit. The scanning unit includes a reflective component for scanning light beams generated by the LIDAR system. The reflective component can be actuated between a range of positions about an actuation axis. In some cases the actuation axis may be a rotational axis, while in other cases, the actuation axis may be a pivot axis and/or an oscillation axis. The range of positions has at least two sub-ranges of positions - this is, a first sub-range is used for redirecting light beams towards the environment, and a second sub-range is used for redirecting light beams towards an inner surface of the housing of the LIDAR system. The first sub-range of the reflective component is employed for building a point cloud being a 3D representation of the environment. The second sub-range of the reflective component is employed for calibrating the detection unit of the LIDAR system.

It is contemplated that the reflective component may find itself in the first sub-range of positions and in the second sub-range of positions during operation of the LIDAR system. For example, during operation of the LIDAR system, the controller may be configured to actuate the reflective component such that the reflective component finds itself in the first sub-range of positions thereby directing light beams towards the environment. As a result, when actuated in the first sub-range, returning light beams are captured by the detection unit for generating an electrical signal carrying information about objects in the environment. In the same example, during operation of the LIDAR system, the controller may be configured to actuate the reflective component such that the reflective component finds itself in the second sub-range of positions thereby directing light beams towards the inner surface of the housing, instead of the environment. As a result, when actuated in the second sub-range, returning light beams are captured by the detection unit for generating a voltage value that is to be compared against a baseline voltage value for calibration purposes.

In at least some embodiments, it is contemplated that in a single scanning cycle of the LIDAR system, the reflective component may find itself mostly in the first sub-range of positions thereby allowing normal operation of the LIDAR system. However, it is also contemplated that during the signal scanning cycle of the LIDAR system, the reflective component may find itself on one or more occasions in the second sub-range of positions, thereby allowing calibration of the detection unit while still offering continuity of operation to the LIDAR system.

It should also be noted that the reflective component does not need to find itself at least once in the second sub-range of positions during each scanning cycle of the LIDAR system. For example, the controller may be configured to position the reflective component at least once in the second sub-range of positions at every M-number of scanning cycles of the LIDAR system.

Additionally or alternatively, the controller may be configured to position the reflective component at least once in the second sub-range of positions in response to a trigger event. For example, during normal operation of the LIDAR system, an environmental sensor may provide information to the controller about one or more environmental parameters such as moisture, temperature, movement, luminosity, and the like. In response to a change in one or more environmental parameters, the controller may trigger a calibration process of the detection unit and actuate the reflective component such that it finds itself in the second sub-range of positions.

In further embodiments, the scanning unit may have more than one reflective components. In these embodiments, it is contemplated that more than one reflective component may include the first sub-range of positions for normal operation of the LIDAR system and the second sub-range of positions for calibration purposes. In at least one embodiment, it is contemplated that a given LIDAR system may have a first reflective component that is implemented similarly to the pivotable reflective component 650 (see FIG.5) and a second reflective component implemented similarly to the rotatable reflective component 760 (see FIG. 6).

In some embodiments of the present technology, the LIDAR system may be configured to execute a method 800, the schematic flowchart of which is depicted in FIG. 8. Various steps of the method 800 will now be described.

### STEP 802: actuating the first reflective component for redirecting the light beam towards an inner surface of the housing instead of the environment

The method 800 begins at step 802 with the LIDAR system configured to actuate a reflective component for redirecting the light beam towards an inner surface of the housing instead of the environment.

It is contemplated that in some embodiments of the present technology, there is envisioned a LIDAR system that has a single reflective component in the scanning unit that is configured to spread the light beams along a single axis. For example, the single reflective component may be implemented similarly to how the reflective component 650 is implemented. In this example, the light beams may be redirected (i) towards the environment when the single reflective component is in one of a first set of positions and (ii) towards the inner surface of the housing 631 when the single reflective component is one of a second set of positions. Therefore, it can be said that LIDAR systems with a single scanning axis are envisioned within the scope of the present technology.

Additionally or alternatively, the single reflective component in the scanning unit may be configured to spread the light beams along two axes. Such a configuration could be implemented by using a MEMs reflective component with two degrees of freedom allowing the MEMs reflective component to spread the light beams along a first axis based on its positions along a first degree of freedom and along a second axis based on its positions along a second degree of freedom. In further embodiments, a MEMs reflective component with a curved surface may be employed in the scanning unit for spreading the light beams along two axes.

In further embodiments of the present technology, where the scanning unit includes a first reflective component and a second reflective component, the controller may actuate at least one of the first reflective component and the second reflective component for redirecting the light beam towards an inner surface of the housing instead of the environment.

In some embodiments, the first reflective component (such as the component 650, for example) may be a pivotable reflective component. In this case, the controller may be configured to pivot the pivotable reflective component to a position in which the light beam is redirected towards the inner surface of the housing instead of the second reflective component.

In other embodiments, the second reflective component (such as the component 760, for example) may be a rotatable multifaceted reflective component spreading the light beam along a Field of View (FOV) having (i) a first portion aligned with the window of the housing for scanning the environment, and (ii) a second portion misaligned with the window. In this case, the controller may be configured to rotate the rotatable multifaceted reflective component so that the light beam is redirected along the second portion of the FOV and towards the inner surface of the housing instead of the window.

### STEP 804: determining a voltage value in response to capturing a returning light beam

The method 800 continues to step 804 with the LIDAR system configured to determine a voltage value in response to capturing a returning light beam. It should be noted that the returning light beam is the light beam reflected by the inner surface of the housing instead of being an other light beam coming from the environment.

It should also be noted that the detection unit of the LIDAR system captures only the returning light beam coming from the inner surface of the housing when determining the voltage value.

### STEP 806: calibrating the detection unit based on a difference between the voltage value and a baseline voltage value

The method 800 continues to step 806 with the LIDAR system configured to calibrate a detection unit of the LIDAR system based on a difference between the voltage value and a baseline voltage value.

In some embodiments of the present technology, the baseline voltage value may be stored prior to operation of the LIDAR system. Broadly speaking, the baseline voltage value is indicative of a given voltage value that the photodetector determines in response to capturing this particular returning light beam (returning to the photodetector after being redirected by the inner surface) if the photodetector is in a calibrated state (normal/baseline state of operation).

Calibration of the photodetector may be performed based on a difference between these two voltage values. For example, the operational voltage of the photodetector may be adjusted so that the voltage values of such returning light beams are equal to the baseline voltage value.

In some embodiments, the controller may apply a reverse bias voltage (adjusted) onto the detection unit, where a value of the reverse bias voltage being based on the difference between the voltage value and the baseline voltage value. In some embodiments, it can be said that the reverse bias voltage may be adjusted based on the difference between the voltage value and the baseline voltage value, such that under the adjusted bias voltage value, the voltage value from such a returning light bean and the baseline voltage value is substantially null.

In further embodiments, the detection unit may be configured to generate an analog signal representative of this particular returning light beam. In this case, the controller may be configured to modify the analog signal based on the difference between the voltage value and the baseline voltage value.

Modifications and improvements to the above-described implementations of the present technology may become apparent to those skilled in the art. The foregoing description is intended to be exemplary rather than limiting. The scope of the present technology is therefore intended to be limited solely by the scope of the appended claims.

**Claims**

1. A method (800) of calibrating a Light detection and ranging (LIDAR) system (600), the LIDAR system (300, 600, 700) mounted to a Self-driving car (SDC) (220) operating in an environment, the LIDAR system having a light source (302, 602, 702, a scanning unit (308, 608, 708), a detection unit (306, 606, 706), and a housing (330, 630, 730),

   the scanning unit (306, 606, 706) including a first reflective component (350, 650, 750) for spreading a light beam from the light source (302, 602, 702) along a first axis;
   the scanning unit (308, 608, 708) and the detection unit (306, 606, 706) being located inside the housing (330, 630, 730), the housing (330, 630, 730) having a window (380, 680, 780) towards the environment and providing cover for the scanning unit (308, 608, 708) and the detection unit (306, 606, 706) from environmental light sources;

   during operation of the LIDAR system (300, 600, 700):

   actuating the first reflective component (350, 650, 750) for redirecting the light beam towards an inner surface of the housing (330, 630, 730) instead of the environment;
   determining, by the detection unit (306, 606, 706), a voltage value in response to capturing a returning light beam, the returning light beam being the light beam reflected by the inner surface of the housing (330, 630, 730) instead of being an other light beam coming from the environment;
   calibrating the detection unit (306, 606, 706) based on a difference between the voltage value and a baseline voltage value,
   the baseline voltage value being a given voltage value that a calibrated detection unit (306, 606, 706) determines when the returning light beam is returning from the inner surface of the housing (330, 630, 730).

2. The method (800) of claim 1, wherein the scanning unit (308, 608, 708) further includes a second reflective component (360, 660, 760) for spreading the light beam from the first reflective component (350, 650, 750) along a second axis, and wherein the actuating the first reflective component (350, 650, 750) comprises actuating at least one of the first reflective component (350, 650, 750) and the second reflective component (360, 660, 760) for redirecting the light beam towards the inner surface of the housing (330, 630, 730) instead of the environment.

3. The method (800) of claim 1 or claim 2, wherein the detection unit captures only the returning light beam coming from the inner surface of the housing when determining the voltage value.

4. The method (800) of claim 2 or claim 3, wherein the first reflective component is a pivotable reflective component, the actuating comprising:
   pivoting the pivotable reflective component to a position in which the light beam is redirected towards the inner surface of the housing instead of the second reflective component.

5. The method (800) of any one of claims 2 to 4, wherein the second reflective component is a rotatable multifaceted reflective component spreading the light beam along a Field of View (FOV), the FOV having (i) a first portion aligned with the window of the housing for scanning the environment, and (ii) a second portion misaligned with the window, the actuating comprising:

rotating the rotatable multifaceted reflective component so that the light beam is redirected along the second portion of the FOV and towards the inner surface of the housing instead of the window.

6. The method (800) of claim 5, wherein the first portion is useful for detecting an object in the environment and the second portion is useful for the calibrating the detection unit instead of the detecting the object.

7. The method (800) of any one of claims 1 to 6, wherein the calibrating comprises:
applying a reverse bias voltage onto the detection unit, a value of the reverse bias voltage being based on the difference between the voltage value and the baseline voltage value.

8. The method (800) of any one of claims 1 to 7, wherein the method further comprises generating, by the detection unit, an analog signal representative of the returning light beam, the calibrating comprising:
modifying the analog signal based on the difference between the voltage value and the baseline voltage value.

9. The method (800) of any one of claims 2 to 8, wherein the first reflective component horizontally spreads the light beam and the second reflective component vertically spreads the light beam.

10. The method (800) of any one of claims 1 to 9, wherein the LIDAR system is operating during operation of the SDC.

11. A Light detection and ranging (LIDAR) system (300, 600, 700) mounted to a Self-driving car (SDC) (220) operating in an environment, the LIDAR system (300, 600, 700) having a light source (302, 602, 702), a scanning unit (308, 608, 708), a detection unit (306, 606, 706), and a housing (330, 630, 730),

the scanning unit (308, 608, 708) including a first reflective component (350, 650, 750) for spreading a light beam from the light source (302, 602, 702) along a first axis;
the scanning unit (308, 608, 708) and the detection unit (306, 606, 706) being located inside the housing (330, 630, 730), the housing (330, 630, 730) having a window (380, 680, 780) towards the environment and providing cover for the scanning unit (308, 608, 708) and the detection unit (306, 606, 706) from environmental light sources;

during operation of the LIDAR system (300, 600, 700), the LIDAR system being configured to:

actuate at least one of the first reflective component (350, 650, 750) and the second reflective component (360, 660, 760) for redirecting the light beam towards an inner surface of the housing (330, 630, 730) instead of the environment; determine, by the detection unit (306, 606, 706), a voltage value in response to capturing a returning light beam,
the returning light beam being the light beam reflected by the inner surface of the housing (330, 630, 730) instead of being an other light beam coming from the environment;
calibrate the detection unit (306, 606, 706) based on a difference between the voltage value and a baseline voltage value,
the baseline voltage value being a given voltage value that a calibrated detection unit (306, 606, 706) determines when the returning light beam is returning from the inner surface of the housing (330, 630, 730).

12. The LIDAR system (300, 600, 700) of claim 11, wherein the scanning unit further includes a second reflective component for spreading the light beam from the first reflective component along a second axis, and wherein to actuate the first reflective component comprises the LIDAR system configured to actuate at least one of the first reflective component and the second reflective component for redirecting the light beam towards the inner surface of the housing instead of the environment.

13. The LIDAR system (300, 600, 700) of claim 12, wherein the detection unit captures only the returning light beam coming from the inner surface of the housing when determining the voltage value.

14. The LIDAR system (300, 600, 700) of claim 13, wherein the first reflective component is a pivotable reflective component, to actuate comprises the LIDAR system configured to:
pivot the pivotable reflective component to a position in which the light beam is redirected towards the inner surface of the housing instead of the second reflective component.

15. The LIDAR system (300, 600, 700) of claim 13, wherein the second reflective component (360) is a rotatable multifaceted reflective component spreading the light beam along a Field of View (FOV), the FOV having (i) a first portion aligned with the window of the housing for scanning the environment, and (ii) a second portion misaligned with the window,

to actuate comprises the LIDAR system configured to:

rotate the rotatable multifaceted reflective component so that the light beam is redirected along the second portion of the FOV and towards the inner surface of the housing instead of the window, and optionally wherein the first portion is useful for detecting an object in the environment and the second portion is useful for the calibrating the detection unit (706) instead of the detecting the object.

**Figure 1**

Figure 2

EP 4 202 485 A1

Figure 3

500

510

520

Figure 4

Figure 5

Figure 6

**800**

```
          ┌─────────┐
          │  START  │
          └─────────┘
               │
               ▼
┌─────────────────────────────────────────┐
│   ACTUATING THE FIRST REFLECTIVE         │
│   COMPONENT FOR REDIRECTING THE LIGHT    │──── 802
│   BEAM TOWARDS AN INNER SURFACE OF THE   │
│   HOUSING INSTEAD OF THE ENVIRONMENT     │
└─────────────────────────────────────────┘
               │
               ▼
┌─────────────────────────────────────────┐
│   DETERMINING A VOLTAGE VALUE IN         │
│   RESPONSE TO CAPTURING A RETURNING      │──── 804
│   LIGHT BEAM                             │
└─────────────────────────────────────────┘
               │
               ▼
┌─────────────────────────────────────────┐
│   CALIBRATING THE DETECTION UNIT         │
│   BASED ON A DIFFERENCE BETWEEN THE      │──── 806
│   VOLTAGE VALUE AND A BASELINE           │
│   VOLTAGE VALUE                          │
└─────────────────────────────────────────┘
               │
               ▼
          ┌─────────┐
          │   END   │
          └─────────┘
```

**Figure 7**

Europäisches
Patentamt

European
Patent Office

Office européen
des brevets

# EUROPEAN SEARCH REPORT

Application Number

EP 22 21 6492

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2019/197894 A1 (INNOVIZ TECH LTD [IL]; ROSENZWEIG OREN [IL]) 17 October 2019 (2019-10-17) * figures 1A,2B,7B,10A * * abstract * * paragraphs [0055], [0157], [0169], [0170], [0198] * | 1-15 | INV. G01S7/497 G01S7/481 G01S17/931 |
| X | DE 10 2020 103794 A1 (DAIMLER AG [DE]; BOSCH GMBH ROBERT [DE]) 19 August 2021 (2021-08-19) * figure 1 * * abstract * * paragraphs [0011], [0014], [0015] * | 1-15 | |

TECHNICAL FIELDS
SEARCHED (IPC)

G01S

The present search report has been drawn up for all claims

| Place of search | Date of completion of the search | Examiner |
|---|---|---|
| Munich | 25 April 2023 | Alberga, Vito |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 21 6492

This annex lists the patent family members relating to the patent documents cited in the above-mentioned European search report.
The members are as contained in the European Patent Office EDP file on
The European Patent Office is in no way liable for these particulars which are merely given for the purpose of information.

25-04-2023

| Patent document cited in search report | Publication date | Patent family member(s) | Publication date |
|---|---|---|---|
| WO 2019197894 A1 | 17-10-2019 | CN 112236685 A<br>EP 3775983 A1<br>US 2021025997 A1<br>WO 2019197894 A1 | 15-01-2021<br>17-02-2021<br>28-01-2021<br>17-10-2019 |
| DE 102020103794 A1 | 19-08-2021 | CN 115066629 A<br>DE 102020103794 A1<br>US 2023076693 A1<br>WO 2021160444 A1 | 16-09-2022<br>19-08-2021<br>09-03-2023<br>19-08-2021 |

EPO FORM P0459

For more details about this annex : see Official Journal of the European Patent Office, No. 12/82

**REFERENCES CITED IN THE DESCRIPTION**

**Patent documents cited in the description**

- US 10241198 B

- RU 2020117983